# EUROPEAN PATENT APPLICATION

(11) **EP 2 031 553 A2**
(43) Date of publication of application: **04.03.2009**
(21) Application number: 08157931.0
(22) Date of filing: 10.06.2008
(51) Int. Cl.: G06Q 30/00, H04L 29/06

(54) **Communication apparatus having information management function and information management method thereof**

(30) Priority: 31.08.2007 KR 20070088604
(71) Applicant: Samsung Electronics Co., Ltd., Suwon-si, Gyeonggi-do 442-742 (KR)
(72) Inventor: Eom, Ki-woong, Songpa-gu Seoul (KR)
(74) Representative: Clark, David James

(57) **Abstract**

A communication apparatus (100) having an information management function, and an information management method thereof are provided. The communication apparatus (100) accesses a server so that a user may purchase a product or perform financial transactions, receives and reconstructs product information or transaction information from the server, encodes and stores the reconstructed information, and provides the information in a table form. Accordingly, the user can efficiently check and manage the information.

## Description

### CROSS-REFERENCE TO RELATED APPLICATIONS

### BACKGROUND OF THE INVENTION

### 1. Field of the Invention

Apparatuses and methods consistent with the present invention relate to providing a communication apparatus having an information management function, and an information management method thereof, and more particularly but not exclusively, to providing a communication apparatus having a function of managing diverse information including information regarding products purchased and information regarding financial transactions, and an information management method thereof.

### 2. Description of the Related Art

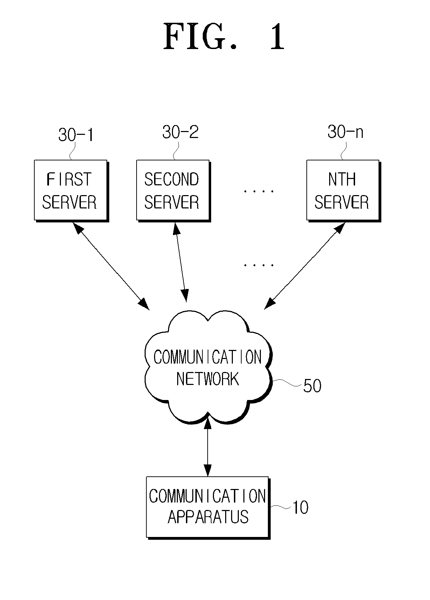

In order to purchase a product on-line or perform financial transactions, users access a server for the respective product or service, and purchase the product or perform financial transactions using the server. An on-line business method in the related art is described with reference to the system of FIG. 1. In the system in FIG. 1, a communication apparatus 10 can access first to N^{th} servers (30-1, 30-2, ..., 30-N) through a wired or wireless communication network 50. The communication apparatus 10 may be an apparatus capable of data transmission and reception, such as a terminal device and/or a broadcast receiving apparatus. The communication network 50 may be the Internet, or a broadcast network. The first to N^{th} servers (30-1, 30-2, ..., 30-N) may be servers connected to a seller, a manufacturer, or a financial provider.

Users can purchase products or perform financial transactions by accessing the first to N^{th} servers (30-1, 30-2, ..., 30-N) through the communication apparatus 10. Product information regarding the product purchased, and transaction information regarding financial transactions are stored in respective servers, so the users must access the corresponding server to confirm the product information or transaction information. In particular, whenever the users inquire about orders, withdrawals, deposits, and balances, personal authentication is required, causing inconvenience to the user. In addition, as the users cannot immediately access information regarding products purchased, the expiration date or exchange period of products may pass.

### SUMMARY OF THE INVENTION

Exemplary embodiments of the present invention aim to address at least the above problems and/or disadvantages and other disadvantages not described above.

Example embodiments of the present invention aim to provide a communication apparatus having an information management function of collecting and reconstructing diverse information, including product information or transaction information, on-line or off-line, so as to efficiently confirm and manage the product information or transaction information, and information management methods thereof.

According to an exemplary aspect of the present invention, there is provided a communication apparatus including: a communication interface unit which is connected to an external server through a communication network, and receives information from the external server; an information management unit which reconstructs the information received through the communication interface unit as reconstructed information, and encodes and stores the reconstructed information; and a control unit which operates the information management unit to reconstruct the information, and encode and store the reconstructed information.

The control unit may operate the information management unit to reconstruct information received from a plurality of servers providing the same kind of services.

The communication apparatus may further include a reading unit which reads transaction information written on a receipt of a product purchased in an off-line market, wherein the control unit operates the communication interface unit to access a server established by the off-line market based on the transaction information read by the reading unit.

The information management unit may include a data editing unit which reconstructs the information provided from the external server as the reconstructed information; an encoding unit which encodes the information reconstructed by the data edition unit; and a database which stores the encoded reconstructed information.

The information provided from the external server may be at least one of product information regarding a product purchased on-line or off-line, and transaction information regarding a financial transaction.

The communication apparatus may further include a display unit, wherein the control unit operates the display unit to display the reconstructed information stored in the information management unit in a table form.

The communication apparatus may be one of a personal computer, a broadcast receiving apparatus, and a home server.

According to another exemplary aspect of the present invention, there is provided an information management method including: connecting to an external server through a communication network, and receiving information from the external server; and reconstructing the received information, and encoding and storing the information as reconstructed information.

In the storing operation, information received from a plurality of servers providing the same kind of services may be reconstructed, encoded and stored as the reconstructed information.

The method may further include reading transaction information written on a receipt of a product purchased in an off-line market, and accessing a server established by the off-line market based on the read transaction information.

The information provided from the external server may be at least one of product information regarding a product purchased on-line or off-line, and transaction information regarding financial transaction.

The method may further include displaying the stored reconstructed information in a table form.

According to another exemplary aspect of the present invention, there is provided an information management method including: receiving a broadcast signal from a broadcast station; dividing the broadcast signal into video data and audio data, and processing the video data and audio data; and displaying the video data on a screen.

The method may further include connecting to an external server through a communication network, and receiving information from the external server; and reconstructing the received information, and encoding and storing the information as reconstructed information.

The method may further include displaying the stored reconstructed information in a table form on the screen.

According to the present invention there is provided an apparatus and method as set forth in the appended claims. Other features of the invention will be apparent from the dependent claims, and the description which follows.

### BRIEF DESCRIPTION OF THE DRAWINGS

The above and/or other aspects of the present invention will be more apparent by describing certain exemplary embodiments of the present invention with reference to the accompanying drawings, in which:
FIG. 1 shows a system for administering an on-line business method in the related art;
FIG. 2 is a schematic block diagram of a communication apparatus according to an exemplary embodiment of the present invention;
FIG. 3 is a schematic block diagram of an information management unit in a communication apparatus according to an exemplary embodiment of the present invention;
FIGs. 4 through 6 are flow charts of a product information management method of a communication apparatus according to an exemplary embodiment of the present invention;
FIG. 7 shows an example of a product information table of a communication apparatus according to an exemplary embodiment of the present invention;
FIG. 8 is a flow chart of a transaction information management method of a communication apparatus according to an exemplary embodiment of the present invention;
FIG. 9 shows an example of a transaction information table of a communication apparatus according to an exemplary embodiment of the present invention; and
FIG. 10 is a schematic block diagram of a communication apparatus according to another exemplary embodiment of the present invention.

### DETAILED DESCRIPTION OF EXEMPLARY EMBODIMENTS OF THE INVENTION

Certain exemplary embodiments of the present invention will now be described in greater detail with reference to the accompanying drawings.

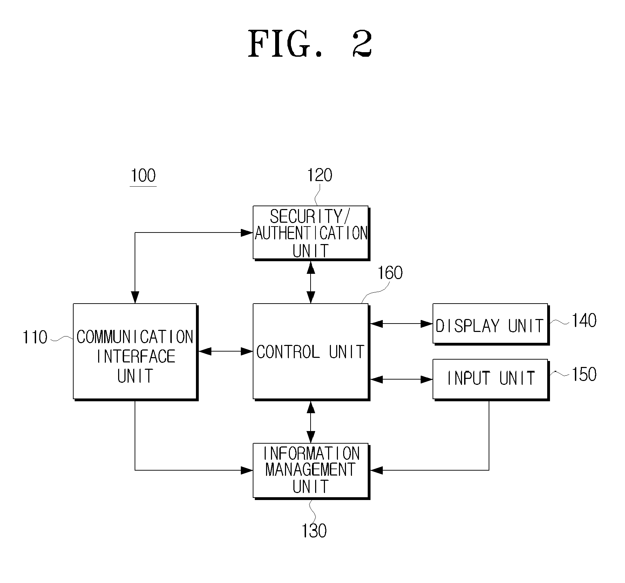

FIG. 2 is a schematic block diagram of a communication apparatus according to an exemplary embodiment of the present invention.

The communication apparatus 100 includes a communication interface unit 110, a security/authentication unit 120, an information management unit 130, a display unit 140, an input unit 150, and a control unit 160.

The communication interface unit 110 is connected to an external server through a communication network such as the Internet or a broadcast network according to commands of the control unit 160, receives diverse information from the external server, and transmits user commands input to the communication apparatus 100 to the external server.

If the communication apparatus 100 accesses the communication network, the security/authentication unit 120 secures the communication apparatus 100 from virus attacks or other unauthorized attempts to access personal information. Additionally, when the communication apparatus 100 logs onto the external server connected through the communication interface unit 110, the security/authentication unit 120 performs the user authentication process, checks the identification, and performs an authentication process for proving a transaction.

The information management unit 130 reconstructs the information received through the communication interface unit 110, and encodes and stores the reconstructed information. That is, the information management unit 130 edits the product information or transaction information provided by the external server in a format set to include the user's desired items. Subsequently, the reconstructed information is encoded and stored so as to be protected from unauthorized access through the communication network. The information management unit 130 also reconstructs information input through the input unit 150, and then the reconstructed information is encoded and stored. The information management unit 130 can decode the stored product information and transaction information.

The display unit 140 displays image information received through the communication interface unit 110, and a user interface needed to control the operation of the communication apparatus 100. In this exemplary embodiment, the display unit 140 displays the product information and transaction information reconstructed by the information management unit 130 in the user's desired format, and also displays information decoded by the information management unit 130 in the user's desired format.

The input unit 150 includes a manipulation reception unit (not shown), such as a keyboard or a remote control, for receiving user commands, and a reading unit (not shown) for reading transaction information on transaction receipts. Accordingly, the input unit 150 transmits user commands input through the keyboard or remote control to the control unit 160, and reads transaction information such as barcodes written on the transaction receipt and transmits the read transaction information to the control unit 160.

The control unit 160 operates the communication interface unit 110 to connect the communication apparatus 100 to the external server according to user commands input through the input unit 150. Subsequently, the control unit 160 operates the information management unit 130 to reconstruct the information provided from the accessed external server, and encode and store the reconstructed information. The control unit 160 then displays the information provided from the external server or the information stored in the information management unit 130 on the display unit 140 so that the user can identify the information. Moreover, the control unit 160 operates the communication interface unit 110 to connect the communication apparatus 100 to an external server according to the transaction information read by the input unit 150. The control unit 160 operates the information management unit 130 to reconstruct information received from a plurality of servers providing the same kinds of services, and encode and store the reconstructed information. A detailed description of the control unit 160 will be given later.

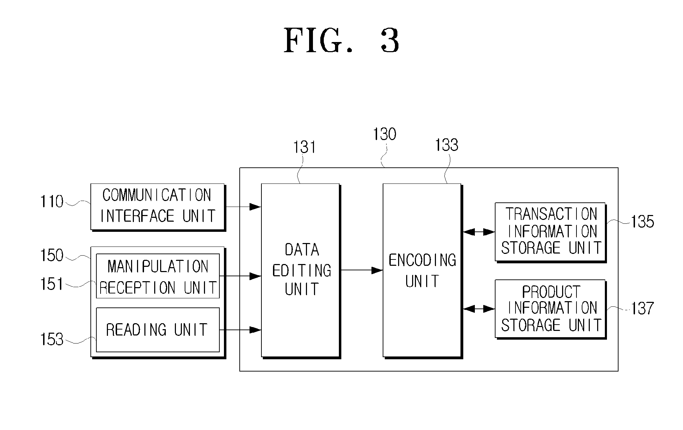

FIG. 3 is a schematic block diagram of an information management unit in a communication apparatus according to an exemplary embodiment of the present invention.

With reference to FIG. 3, the information management unit 130 in the communication apparatus 100 includes a data editing unit 131, an encoding unit 133, a transaction information storage unit 135, and a product information storage unit 137.

The data editing unit 131 receives information provided from the external server through the communication interface unit 110, information input through a manipulation reception unit 151, and information input through a reading unit 153 of the input unit 150, and edits the information using a format preset by the user.

The encoding unit 133 encodes the information reconstructed by the data editing unit 131, or decodes information which is encoded and stored in the transaction information storage unit 135 and the product information storage unit 137.

The transaction information storage unit 135 stores transaction information regarding a purchased product or financial transaction which is encoded by the encoding unit 133. The transaction information may include the transaction date, transaction item, and seller. The transaction information storage unit 135 classifies and edits the transaction information to display the stored transaction information on the display unit 140.

The product information storage unit 137 stores product information regarding the purchased product encoded by the encoding unit 133. The product information may include the manufacturing date, manufacturer, price, and a manual or user's guide. The product information stored in the product information storage unit 137 is associated with the transaction information stored in the transaction information storage unit 135.

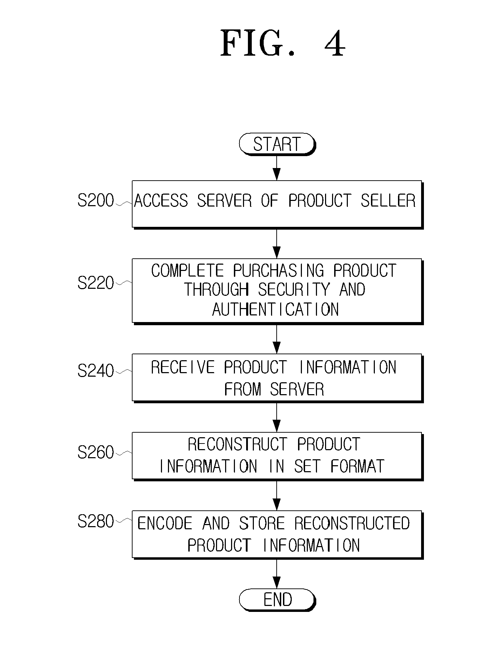

FIGs. 4 through 6 are flow charts of a product information management method of a communication apparatus according to an exemplary embodiment of the present invention.

With reference to FIG. 4, in operation S200, when the user purchases a product on-line, the control unit 160 operates the communication interface unit 110 to connect the communication apparatus 100 to a server of the product seller according to user commands input through the input unit 150.

If the user completes purchasing the product through the security and authentication processes in operation S220, the control unit 160 operates the communication interface unit 110 to receive product information from the server in operation S240. For example, if the user purchases a water purifier at an on-line shop, the communication apparatus 100 receives product information regarding the water purifier from the on-line shop after settlement is completed.

Subsequently, in operation S260, the control unit 160 operates the information management unit 130 to reconstruct the product information in the set format. That is, the product information regarding the water purifier, such as the product name, price, manufacturing date, and manufacturer, is reconstructed in the format preset in the communication apparatus 100. In operation S280, the control unit 160 operates the information management unit 130 to encode and store the reconstructed product information.

In the above described process, the communication apparatus 100 receives and reconstructs the product information from the server of the product seller, and stores the reconstructed product information. The stored product information is decoded and displayed on the display unit 140 if necessary.

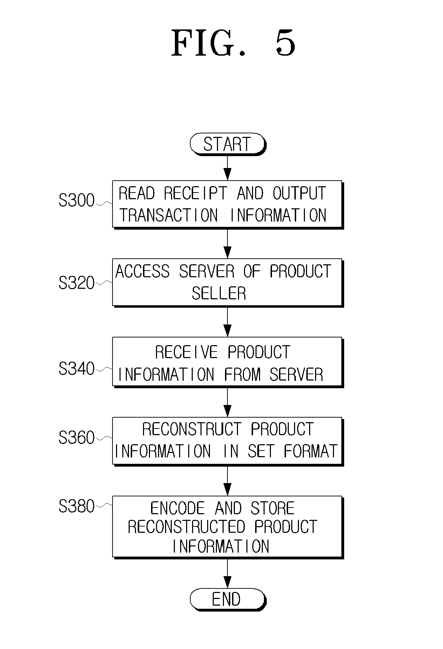

In FIG. 5, in operation S300, if the user purchases products at an off-line shop, the control unit 160 operates the reading unit 153 to read the receipt listing the purchased items and output the transaction information according to user commands input through the input unit 150.

In operation S320, the control unit 160 operates the communication interface unit 110 to connect the communication apparatus 100 to the server of the product seller according to the transaction information output from the reading unit 153. For example, if the barcodes on the receipt is read using the reading unit 153 after the user purchases food in a supermarket, the communication apparatus 100 accesses a server of the supermarket.

In the operation S340, the control unit 160 operates the communication interface unit 110 to receive product information regarding the products listed on the receipt from the server of the seller. Subsequently, the control unit 160 operates the information management unit 130 to edit or reconstruct the product information in the set format in operation S360, and encode and store the constructed product information in operation S380.

In other words, if the communication apparatus 100 is connected to the server on which the supermarket establishes an on-line shop, the user can confirm the information regarding the purchased goods on-line, and the confirmed information is stored in the communication apparatus 100.

During this process, product information regarding the goods purchased off-line can be received and reconstructed from the server on which the seller has an on-line by the seller, and encoded and stored in the communication apparatus 100. The stored information is decoded and displayed on the display unit 140 if necessary.

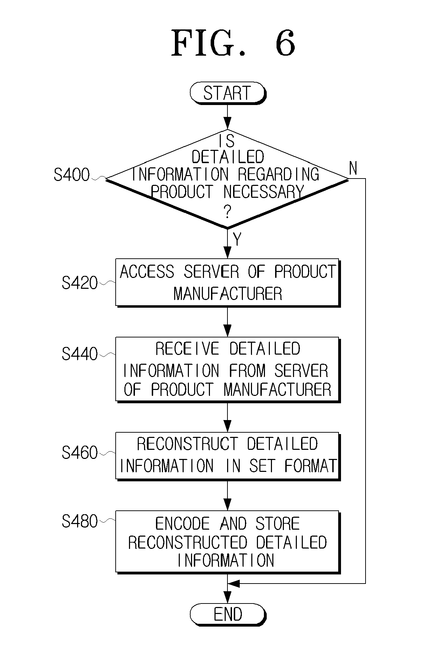

In FIG. 6, if detailed information regarding the product is necessary in operation S400, the control unit 160 operates the communication interface unit 110 to connect the communication apparatus 100 to a server of the product manufacturer according to user commands input through the input unit 150 in operation S420, and to receive detailed information regarding the product in operation S440. Subsequently, the control unit 160 operates the information management unit 130 to reconstruct the detailed information in the set format in operation S460, and to encode and store the reconstructed detailed information in operation S480.

For example, as described with reference to FIGs. 4 and 5, after a product is purchased on-line or off-line, the communication apparatus 100 receives and stores product information regarding the purchased product from the server of the seller. If the user needs the detailed information more than the stored product information, the user can access the server of the product manufacturer, and acquire the detailed information.

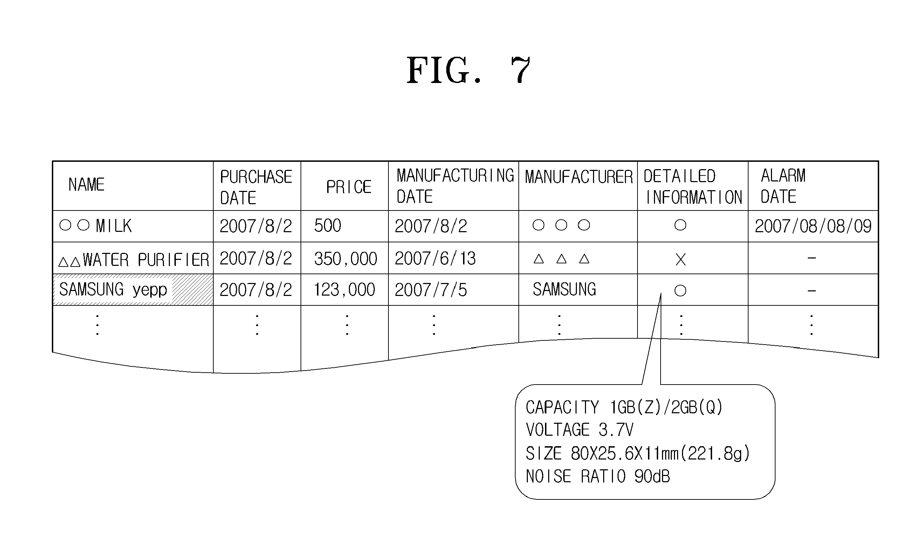

The product information received from the seller's server and the detailed information received from the manufacturer's server are reconstructed for example in table form as shown in FIG. 7.

FIG. 7 shows an example of a product information table of a communication apparatus according to an exemplary embodiment of the present invention. In FIG. 7, the product information is reconstructed in table form, including items such as the product name, purchase date, price, manufacturing date, manufacturer, and detailed information. Such product information may be displayed in table form on the display unit 140. When the user would like to identify the detailed information, the detailed information may be displayed on the display unit 140 when the product name is selected.

The communication apparatus 100 may provide notification informing the user of the expiration date of food such as milk. As shown in FIG. 7, the expiration date may be input directly by the user using the manipulation reception unit 151, or automatically input by including the expiration date in information received from the seller's server or the manufacturer's server.

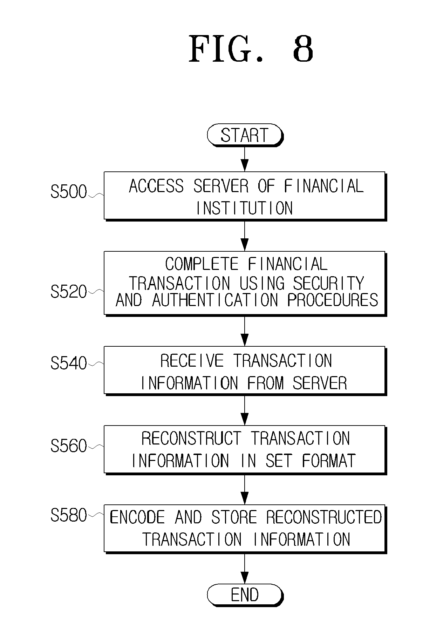

FIG. 8 is a flow chart of a transaction information management method of a communication apparatus according to an exemplary embodiment of the present invention.

In operation S500, if the user would like to perform financial transactions through a financial institution such as a bank or a securities company, the control unit 160 operates the communication interface unit 110 to access a server of the financial institution according to user commands input through the input unit 150.

If the financial transactions are completed using security and authentication processes in operation S520, the control unit 160 operates the communication interface unit 110 to receive information regarding the transactions from the server of the financial institution in operation S540. Subsequently, the control unit 160 operates the information management unit 130 to reconstruct the transaction information in the set format in operation S560, and encodes and stores the reconstructed transaction information in operation S580.

For example, if the user accesses a server of an on-line bank and completes a transfer of money, transaction information including the transaction date, bank, amount transferred, and the balance is reconstructed and stored in a format preset in the communication apparatus 100.

In this process, the transaction information is received from the server of the financial institution, reconstructed, and encoded and stored in the communication apparatus 100. The stored information is decoded and displayed on the display unit 140 if necessary.

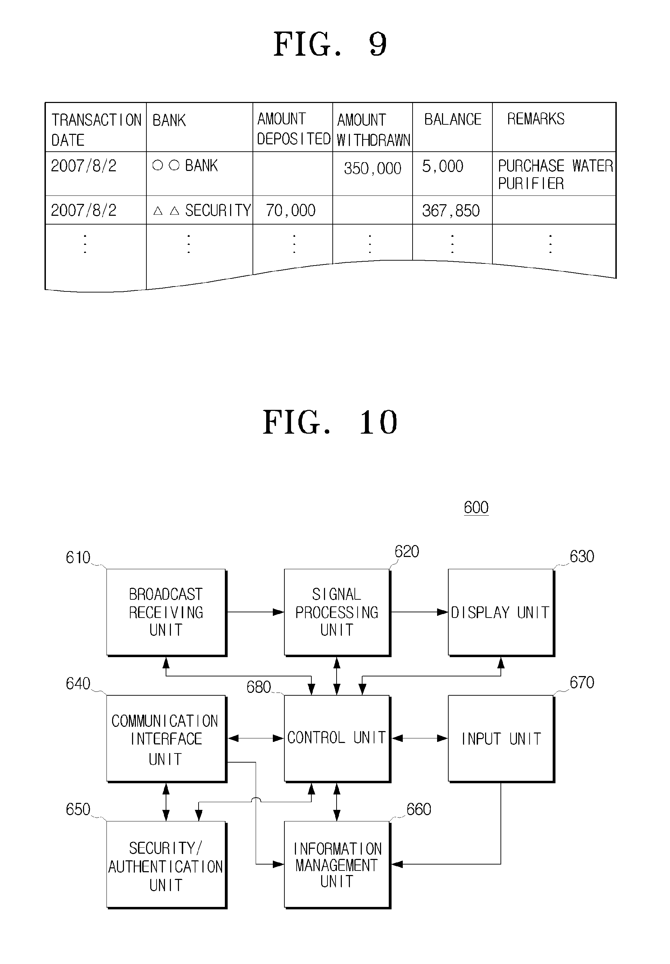

FIG. 9 shows an example of a transaction information table of a communication apparatus according to an exemplary embodiment of the present invention. The transaction information is reconstructed in table form, including the transaction date, bank, amount deposited, amount withdrawn, balance, and remarks. The transaction information can be displayed on the display unit 140 in this table, so the user can check the balance and transaction breakdown without access to the server.

Although not described with reference to the drawings, the communication apparatus 100 according to the exemplary embodiments of the present invention can receive diverse information directly from the user using the manipulation receiving unit 151, such as a remote control or keyboard, instead of receiving the product information or transaction information from the external server. The information input by the user may also be reconstructed and stored in the information management unit 130 in the preset format.

The communication apparatus 100 according to exemplary embodiments of the present invention may be an electronic device, which is connected to the communication network in a wired or wireless manner, and is capable of transmitting and receiving information, including a digital broadcast receiving apparatus, a personal computer, a cell phone, and a personal digital assistant (PDA). In FIG. 10, a broadcast receiving apparatus is given as an example of the communication apparatus 100.

FIG. 10 is a schematic block diagram of a communication apparatus according to another exemplary embodiment of the present invention.

The communication apparatus comprises a broadcast receiving apparatus 600 including a broadcast receiving unit 610, a signal processing unit 620, a display unit 630, a communication interface unit 640, a security/authentication unit 650, an information management unit 660, an input unit 670, and a control unit 680.

The broadcast receiving unit 610 may be implemented with a tuner which tunes to a broadcast signal transmitted from a broadcast station, and a demodulator which outputs the broadcast signal as a transport stream (TS) format through the demodulation and error correction, and tunes to a broadcast signal in the frequency band corresponding to a channel selected by the control unit 680.

The signal processing unit 620 divides the broadcast signal demodulated by the broadcast receiving unit 610 into video data, audio data, and additional data defined by the Program and Service Information Protocol (PSIP), and outputs those data in a bit stream format. The audio data are decoded and processed in an output standard of a speaker (not shown). The video data are decoded and processed to have the vertical frequency, resolution level, aspect ratio corresponding to an output standard of the display unit 630.

The communication interface unit 640 accesses an external server through a communication network such as the Internet, or a broadcast communication network by the control unit 680, receives diverse information from the external server, and transmits user commands input to the broadcast receiving apparatus 600 to a corresponding server.

If the broadcast receiving apparatus 600 accesses the communication network, the security/authentication unit 650 secures the broadcast receiving apparatus 600 from viruses or other unauthorized attempts to access personal information. Additionally, when the broadcast receiving apparatus 600 logs on the external server connected through the communication interface unit 640, the security/authentication unit 650 performs the user authentication process, checks the user's identification, and performs authentication procedures for proving the transaction.

The information management unit 660 reconstructs information received through the communication interface unit 640, and encodes and stores the reconstructed information. That is, the information management unit 660 edits the product information or transaction information provided from the external server in a format set to include the user's desired items. Subsequently, the reconstructed information is encoded and stored so as to be protected from unauthorized access through the communication network. The information management unit 660 also reconstructs information input through the input unit 670, and then the reconstructed information is encoded and stored. The information management unit 660 can decode the stored product information and transaction information.

The input unit 670 includes a manipulation reception unit (not shown), such as a keyboard or a remote control, for receiving user commands, and a reading unit (not shown) for reading transaction information on receipt of transferred funds. Accordingly, the input unit 670 transmits user commands input through the keyboard or remote control to the control unit 680, reads transaction information such as barcodes written on the transaction receipt, and transmits the read transaction information to the control unit 680.

The display unit 630 displays image information received through the communication interface unit 640, and a user interface needed to control the operation of the broadcast receiving apparatus 600. In the exemplary embodiments of the present invention, the display unit 630 displays the product information and transaction information reconstructed by the information management unit 660 in the user's desired format, and also displays information decoded by the information management unit 660 in the user's desired format.

The control unit 680 controls the operation of the broadcast receiving apparatus 600 according to user commands input through the input unit 670. That is, the control unit 680 operates the broadcast receiving unit 610 to receive broadcast signals of a channel selected by user commands, and operates the signal processing unit 620 and the display unit 630 to process and display the received broadcast signals. Furthermore, the control unit 680 operates the communication interface unit 640 to connect the broadcast receiving apparatus 600 to the external server.

Subsequently, the control unit 680 operates the information management unit 660 to reconstruct the information provided from the accessed external server, and encode and store the reconstructed information. Then, the control unit 680 displays the information provided from the external server or the information stored in the information management unit 660 on the display unit 630 so that the user can check the information. Moreover, the control unit 680 operates the communication interface unit 640 to access the broadcast receiving apparatus 600 to an external server according to the transaction information read by the input unit 670. The control unit 680 operates the information management unit 660 to reconstruct information received from a plurality of servers providing the same kinds of services, and encode and store the reconstructed information. Such operations of the control unit 680 were described above with reference to FIGs. 3 through 9.

As described above, the broadcast receiving apparatus 600 may be a digital television which receives and provides digital broadcast signals to users, and may function as a home server in a home network.

As can be appreciated from the above description, the example communication apparatus may collect diverse information including product information and transaction information on-line or off-line, and directly manages the information, so that the user can easily check desired information and efficiently manage the purchased goods without directly accessing servers.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A communication apparatus (100) comprising:
a communication interface unit (110) which is connected to an external server through a communication network, and receives information from the external server;
an information management unit (130) which reconstructs the information received through the communication interface unit (110) as reconstructed information, and encodes and stores the reconstructed information; and
a control unit (160) which operates the information management unit to reconstruct the information, and encode and store the reconstructed information.

2. The communication apparatus of claim 1, wherein the control unit (160) operates the information management unit (130) to reconstruct information received from a plurality of servers providing the same kind of services.

3. The communication apparatus of claim 1 or 2, further comprising a reading unit (153) which reads transaction information written on a receipt of a product purchased in an off-line market,
wherein the control unit (160) operates the communication interface unit (110) to access a server established by the off-line market, based on the transaction information read by the reading unit (153).

4. The communication apparatus of any one of claims 1-3, wherein the information management unit (130) comprises
a data editing unit (131) which reconstructs the information provided from the external server as the reconstructed information;
an encoding unit (133) which encodes the reconstructed information; and
a database (135, 137) which stores the encoded reconstructed information.

5. The communication apparatus of any one of claims 1-4, wherein the information received from the external server is at least one of product information regarding a product purchased on-line or off-line, and transaction information regarding a financial transaction.

6. The communication apparatus of any one of claims 1-5, further comprising a display unit (140),
wherein the control unit (160) operates the display unit (140) to display the reconstructed information stored in the information management unit (130) in a table form.

7. The communication apparatus of any one of claims 1-16, wherein the communication apparatus is one of a personal computer, a broadcast receiving apparatus, and a home server.

8. An information management method comprising:
connecting to an external server (S200, S240) through a communication network, and receiving information from the external server; and
reconstructing the received information, and encoding and storing the reconstructed information (S260, S280).

9. The method of claim 8, wherein in the storing operation, information received from a plurality of servers providing the same kind of services is reconstructed, encoded and stored as the reconstructed information.

10. The method of claim 8 or 9, further comprising reading transaction information written on a receipt of a product purchased in an off-line market (S300), and
accessing a server established by the off-line market based on the read transaction information (S320).

11. The method of any one of claims 8-10, wherein the information provided from the external server is at least one of product information regarding a product purchased on-line or off-line, and transaction information regarding a financial transaction.

12. The method of any one of claims 8-11, further comprising displaying the stored reconstructed information in a table form.

13. The method of any one of claims 8-12, futher comprising;
receiving a broadcast signal from a broadcast station;
dividing the broadcast signal into video data and the audio data, and processing the video data and audio data; and
displaying the video data on a screen.
